# EUROPEAN PATENT APPLICATION

(11) **EP 4 749 584 A1**
(43) Date of publication of application: **27.05.2026**
(21) Application number: 25208730.9
(22) Date of filing: 15.10.2025
(51) Int. Cl.: G06V 10/82, G06V 20/70, G06V 30/10

(54) **INFORMATION PROCESSING APPARATUS, PROMPT GENERATION METHOD, AND IMAGE GENERATION METHOD**

(30) Priority: 22.11.2024 JP 2024203799
(71) Applicant: Lenovo (Singapore) Pte. Ltd., Singapore 556741 (SG)
(72) Inventor: NOMURA, Ryohta, Yokohama-shi, 220-0012 (JP); ABE, Kyosuke, Yokohama-shi, 220-0012 (JP)
(74) Representative: Openshaw & Co.

(57) **Abstract**

An object of the present invention is to improve convenience in a case of using image generation AI.

An information processing apparatus includes a line detection unit configured to detect a first input line input across a first region indicating a range of an image to be input to an image generation model, and a second region indicating a predetermined range outside the first region, a letter detection unit configured to detect letters input in the first region and letters input in the second region in a distinguishable manner, a word cluster determination unit configured to determine, as a word cluster, a letter group including one or a plurality of words among the detected letters, an extraction unit configured to extract a connection line of which one end of the first input line is connected to the word cluster in the second region, and the word cluster connected to the connection line, a connection destination determination unit configured to determine a connection destination of the other end of the connection line, and a prompt generation unit configured to generate a prompt as an input sentence for the image generation model based on the word cluster and the connection line, and a position and a size corresponding to the connection destination of the other end of the connection line.

## Description

### BACKGROUND OF THE INVENTION

### Field of the Invention

The present invention relates to an information processing apparatus, a prompt generation method, and an image generation method.

### Description of the Related Art

In recent years, an image generation artificial intelligence (AI) that generates an image from an image such as a hand-drawn rough sketch (image to image) has been known. In addition, there is also an image generation AI that generates an image by inputting a prompt created using text (text to image) (for example, see Japanese Unexamined Patent Application Publication No. 2024-120131).

### SUMMARY OF THE INVENTION

However, a person who is not good at drawing feels anxious about drawing an image that the person imagines, and there is a concern that an image as desired is not generated. In addition, some of the image generation AIs as described above generate an image by inputting a prompt in which the objects the user wants to include in the image to be generated are described in text, but it is not easy and troublesome for the user to express the objects accurately (and in a way the image generation AI can understand), since the user has to describe the position in the image where the objects are to be positioned in a sentence.

The present invention has been made in view of the above circumstances, and an object of the present invention is to provide an information processing apparatus, a prompt generation method, and an image generation method that improve convenience in a case of using image generation AI.

The present invention has been made in order to solve the above-described problems, and an information processing apparatus according to the first aspect of the present invention includes an input reception unit configured to receive an input to a first region indicating a range of an image to be input to an image generation model, and a second region indicating a predetermined range outside the first region, a line detection unit configured to detect a first input line input across the first region and the second region, a letter detection unit configured to detect letters input in the first region and letters input in the second region in a distinguishable manner, a word cluster determination unit configured to determine, as a word cluster, a letter group including one or a plurality of words among the letters detected by the letter detection unit, an extraction unit configured to extract a connection line of which one end of the first input line detected by the line detection unit is connected to the word cluster in the second region, and the word cluster connected to the connection line, a connection destination determination unit configured to determine a connection destination of the other end of the connection line extracted by the extraction unit, and a prompt generation unit configured to generate a prompt as an input sentence for the image generation model based on the word cluster and the connection line extracted by the extraction unit, and a position and a size corresponding to the connection destination of the other end of the connection line determined by the connection destination determination unit.

In the information processing apparatus according to the first aspect of the present invention, the connection destination determination unit may determine whether or not the other end of the connection line is connected to a second input line input in the first region, and determine that the connection destination of the other end of the connection line is the second input line in a case where the other end of the connection line is determined to be connected to the second input line, and the prompt generation unit may generate the prompt for instructing so that an image corresponding to the word cluster in which the connection destination of the other end of the connection line is determined to be the second input line is positioned at a position and a size determined according to a range of a stroke of the second input line.

In the information processing apparatus according to the first aspect of the present invention, the connection destination determination unit may determine that the connection destination of the other end of the connection line is the first region in a case where the other end of the connection line is determined not to be connected to the second input line, and the prompt generation unit may generate the prompt for instructing so that an image corresponding to the word cluster in which the connection destination of the other end of the connection line is determined to be the first region is applied to an entire range of the first region.

In the information processing apparatus according to the first aspect of the present invention, the prompt generation unit may generate the prompt for instructing so that an image corresponding to the word cluster that is not extracted by the extraction unit among the word clusters in the second region is applied to an entire range of the first region.

In the information processing apparatus according to the first aspect of the present invention, the connection destination determination unit may determine connection between the other end of the connection line and the second input line based on a distance between the other end of the connection line and the second input line.

In the information processing apparatus according to the first aspect of the present invention, the connection destination determination unit may determine connection between the other end of the connection line and the second input line based on whether or not the other end of the connection line enters a bounding box indicating a range in which the second input line is drawn.

In the information processing apparatus according to the first aspect of the present invention, the extraction unit may determine connection between the first input line and the word cluster based on a distance between the one end of the first input line and the word cluster, and extract the first input line connected to the word cluster as the connection line.

In the information processing apparatus according to the first aspect of the present invention, the extraction unit may determine connection between the first input line and the word cluster based on whether or not the one end of the first input line enters a bounding box indicating a range around the letter group of the word cluster, and extract, as the connection line, the first input line of which the one end of the first input line enters the bounding box of the word cluster.

The information processing apparatus according to the first aspect of the present invention may further include a generated image acquisition unit configured to acquire a generated image output from the image generation model by inputting at least the prompt generated by the prompt generation unit to the image generation model.

The information processing apparatus according to the first aspect of the present invention may further include a letter removal unit configured to generate an image in which the letters input in the first region, the first input line, and the second input line are removed from an image in the first region, as an input image for the image generation model, and a generated image acquisition unit configured to acquire a generated image output from the image generation model by inputting the input image generated by the letter removal unit and the prompt generated by the prompt generation unit to the image generation model.

In addition, a prompt generation method in an information processing apparatus according to the second aspect of the present invention, the method include a step of receiving an input to a first region indicating a range of an image to be input to an image generation model, and a second region indicating a predetermined range outside the first region, via an input reception unit, a step of detecting a first input line input across the first region and the second region via a line detection unit, a step of detecting letters input in the first region and letters input in the second region in a distinguishable manner via a letter detection unit, a step of determining, as a word cluster, a letter group including one or a plurality of words among the letters detected by the letter detection unit, via a word cluster determination unit, a step of extracting a connection line of which one end of the first input line detected by the line detection unit is connected to the word cluster in the second region, and the word cluster connected to the connection line, via an extraction unit, a step of determining a connection destination of the other end of the connection line extracted by the extraction unit via a connection destination determination unit, and a step of generating a prompt as an input sentence for the image generation model based on the word cluster and the connection line extracted by the extraction unit, and a position and a size corresponding to the connection destination of the other end of the connection line determined by the connection destination determination unit, via a prompt generation unit.

In addition, an image generation method in an information processing apparatus according to the third aspect of the present invention, the method includes a step of receiving an input to a first region indicating a range of an image to be input to an image generation model, and a second region indicating a predetermined range outside the first region, via an input reception unit, a step of detecting a first input line input across the first region and the second region via a line detection unit, a step of detecting letters input in the first region and letters input in the second region in a distinguishable manner via a letter detection unit, a step of determining, as a word cluster, a letter group including one or a plurality of words among the letters detected by the letter detection unit, via a word cluster determination unit, a step of extracting a connection line of which one end of the first input line detected by the line detection unit is connected to the word cluster in the second region, and the word cluster connected to the connection line, via an extraction unit, a step of determining a connection destination of the other end of the connection line extracted by the extraction unit via a connection destination determination unit, a step of generating a prompt as an input sentence for the image generation model based on the word cluster and the connection line extracted by the extraction unit, and a position and a size corresponding to the connection destination of the other end of the connection line determined by the connection destination determination unit, via a prompt generation unit, and a step of acquiring a generated image output from the image generation model by inputting at least the prompt generated by the prompt generation unit to the image generation model, via a generated image acquisition unit.

According to the above-described aspects of the present invention, it is possible to improve convenience in a case of using image generation AI.

### BRIEF DESCRIPTION OF THE DRAWINGS

FIG. 1 is a diagram illustrating an example of a configuration of an information processing system according to the first embodiment.
FIG. 2 is a block diagram illustrating an example of a hardware configuration of the information processing apparatus according to the first embodiment.
FIG. 3 is a diagram illustrating an example of an image generation UI according to the first embodiment.
FIG. 4 is a diagram illustrating an input example of an input area and an output example of an output area according to the first embodiment.
FIG. 5 is a block diagram illustrating an example of a functional configuration related to image generation processing according to the first embodiment.
FIG. 6 is a flowchart illustrating an example of prompt generation processing according to the first embodiment.
FIG. 7 is a flowchart illustrating an example of image generation processing according to the first embodiment.
FIG. 8 is a diagram illustrating another example of the input of the input area and the output of the output area according to the first embodiment.
FIG. 9 is a diagram illustrating an example of a prompt when a specific symbol is present and when the specific symbol is not present according to the first embodiment.
FIG. 10 is a diagram illustrating an example of an image generated by handwritten input of the letters illustrated in FIG. 9 according to the first embodiment.
FIG. 11 is a diagram illustrating an input example of an input area and a generation example of a prompt according to the second embodiment.
FIG. 12 is a block diagram illustrating an example of a functional configuration related to image generation processing according to the second embodiment.
FIG. 13 is a flowchart illustrating an example of prompt generation processing according to the second embodiment.
FIG. 14 is a flowchart illustrating an example of connector candidate detection processing according to the second embodiment.
FIG. 15 is a flowchart illustrating an example of word cluster detection processing according to the second embodiment.
FIG. 16 is a flowchart illustrating an example of connector extraction processing according to the second embodiment.
FIG. 17 is a flowchart illustrating an example of connector connection destination determination processing according to the second embodiment.

### DETAILED DESCRIPTION OF THE INVENTION

Hereinafter, an embodiment of the present invention will be described with reference to the drawings.

### <First Embodiment>

### [System Configuration]

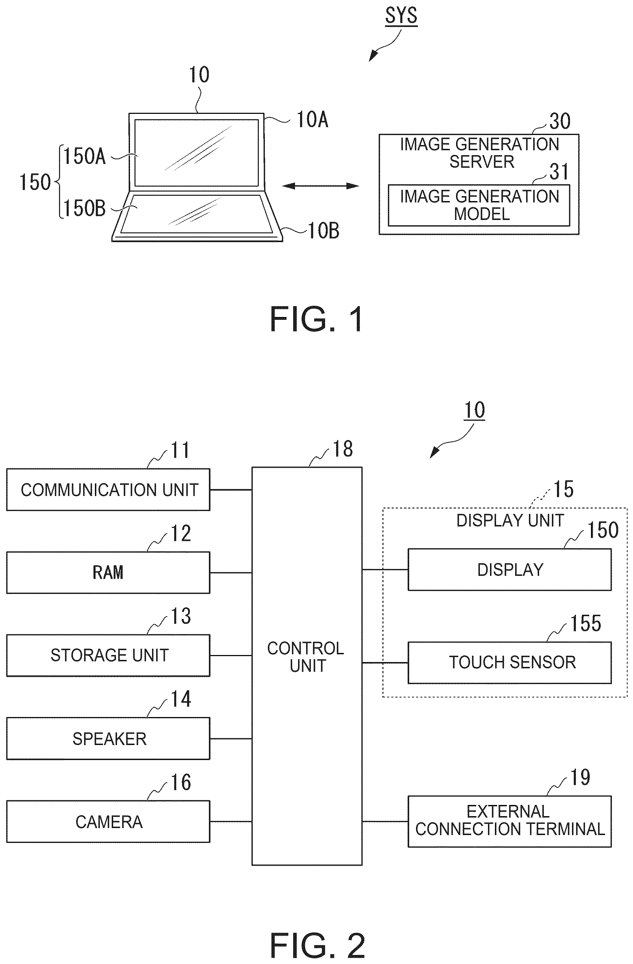

FIG. 1 is a diagram illustrating an example of a configuration of an information processing system according to the present embodiment. The information processing system SYS includes the information processing apparatus 10 and an image generation server 30.

The information processing apparatus 10 is, for example, a clamshell type (laptop) personal computer (PC). In the information processing apparatus 10, a first chassis 10A and a second chassis 10B having a substantially quadrangular plate shape (for example, a flat plate shape) are coupled (connected) to each other via a hinge mechanism to be openable and closable. In addition, the information processing apparatus 10 is provided with a display 150 over the first chassis 10A to the second chassis 10B.

The display 150 is a flexible display that can be bent when the first chassis 10A and the second chassis 10B are opened and closed. As the flexible display, for example, an organic EL display or the like is used. For example, the display 150 can be used not only in a single screen mode in which the entire screen region is used as one screen but also in a two-screen mode in which the entire screen region is divided into two screens of a first screen region 150A on the first chassis 10A side and a second screen region 150B on the second chassis 10B side. For example, when the information processing apparatus 10 is used by being placed on a desk, the second screen region 150B on the second chassis 10B side is a substantially horizontal screen parallel to the surface of the desk.

In addition, a touch sensor is provided on (the surface of) the screen of the display 150. The information processing apparatus 10 can detect a touch operation on a screen region of the display 150. By bringing the information processing apparatus 10 into an open state, the user can visually recognize the display of the display 150 provided on the inner surfaces of each of the first chassis 10A and the second chassis 10B, and can perform a touch operation on the display 150, and thus the information processing apparatus 10 can be used.

The image generation server 30 includes an image generation model 31. The image generation model 31 is, for example, an image generation model trained using a diffusion model, and generates an image from an input image or a prompt (text). That is, the image generation server 30 functions as an image generation artificial intelligence (AI) that generates and outputs an image from an image or a prompt (text) using the image generation model 31. The image generation server 30 may be configured as one server or may be configured by being distributed to a plurality of servers.

In the present embodiment, a configuration will be described as an example in which an image generation AI that generates an image using the image generation model 31 is provided in the server, and the information processing apparatus 10 communicates with the server to use the function of the image generation AI. However, a configuration may be adopted in which the function of the image generation AI is downloaded to the information processing apparatus 10 for local use.

### [Hardware Configuration of Information Processing Apparatus 10]

Hereinafter, a specific configuration of the information processing apparatus 10 will be described.

FIG. 2 is a block diagram illustrating an example of a hardware configuration of an information processing apparatus 10 according to the present embodiment. The information processing apparatus 10 includes a communication unit 11, a random access memory (RAM) 12, a storage unit 13, a speaker 14, a display unit 15, a camera 16, and a control unit 18. Each of these units is connected via a bus or the like in a communicable manner.

The communication unit 11 is configured to include, for example, a plurality of Ethernet (registered trademark) ports, a plurality of digital input and output ports such as universal serial bus (USB), a communication device that performs wireless communication such as Bluetooth (registered trademark) or Wi-Fi (registered trademark), and the like.

For example, the communication unit 11 can communicate with a touch pen, a mouse, a touch pad, or the like using Bluetooth (registered trademark). In addition, the communication unit 11 can communicate with the image generation server 30 illustrated in FIG. 1 by connecting to the Internet via wireless communication such as Wi-Fi (registered trademark) or wired communication such as Ethernet (registered trademark).

The RAM 12 is a volatile memory in which a program or data of processing executed by the control unit 18 is developed, and various types of data are appropriately stored or deleted. Since the RAM 12 is a volatile memory, the RAM 12 does not hold data when power supply to the RAM 12 is stopped. Data that needs to be held when the power supply to the RAM 12 is stopped is moved to the storage unit 13.

The storage unit 13 is a storage device configured to include any one or a plurality of a solid state drive (SSD), a hard disk drive (HDD), a read only memory (ROM), a flash ROM, or the like. For example, the storage unit 13 stores a program or setting data of a basic input output system (BIOS), a program of an operating system (OS) or an application that operates on the OS, various types of data used in the application, and the like.

The speaker 14 outputs an electronic sound, a voice, or the like.

The display unit 15 includes a display 150 and a touch sensor 155. As described above, the display 150 is a flexible display that can be bent in accordance with the opening and closing of the first chassis 10A and the second chassis 10B. The display 150 displays a desktop screen of an OS, a window of an application that is being executed, and the like according to the control of the control unit 18.

The touch sensor 155 is provided on a screen of the display 150 and detects a touch operation on the screen. The touch operation includes, for example, a tap operation, a slide operation, a flick operation, a swipe operation, and a pinch operation. In addition, a finger, a touch pen, or the like can be used as an operation section for performing the touch operation.

The camera 16 is configured to include a lens, an imaging element, and the like. The camera 16 captures an image (a still image or a video) and outputs data of the captured image according to the control of the control unit 18.

The control unit 18 is configured to include a processor such as a central processing unit (CPU), a graphic processing unit (GPU), or a microcomputer, and various functions are realized by executing programs (various programs such as a BIOS, an OS, and applications that operate on the OS) stored in the storage unit 13 and the like. For example, the control unit 18 controls a screen mode of the display 150, controls display in a screen region, and detects a touch operation on the touch sensor 155.

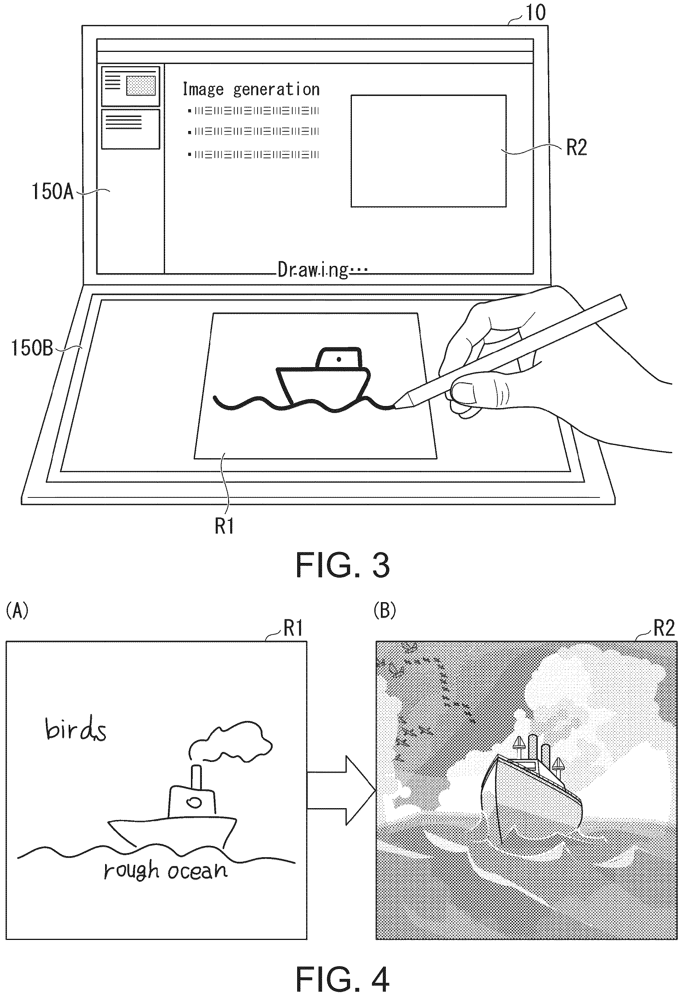

Next, the image generation processing using the image generation model (image generation AI) in the information processing apparatus 10 will be described. First, a user interface (UI) will be described with reference to FIG. 3.

### [Image Generation UI]

FIG. 3 is a diagram illustrating an example of an image generation UI according to the present embodiment.

In the example illustrated in the drawing, the information processing apparatus 10 controls the display 150 in a two-screen mode of the first screen region 150A and the second screen region 150B. A window of an application (hereinafter, referred to as an "image generation application") having an image generation function of generating an image using an image generation model (image generation AI) is displayed in the first screen region 150A and the second screen region 150B.

In the second screen region 150B, a window including an input area R1 for inputting information on the image to be generated among the windows of the image generation application is displayed as the UI. In addition, in the first screen region 150A, a window including an output area R2 for displaying the generated generated image among the windows of the image generation application is displayed as the UI.

The user can input a rough sketch in the input area R1 by hand and can also input letters on the rough sketch by hand. Since the second screen region 150B is a substantially horizontal screen when the information processing apparatus 10 is used by being placed on a desk, the user can easily perform input because the input area R1 is present on the second screen region 150B side.

The user can mainly use a touch pen in a case of inputting a rough sketch and letters by hand, but may use a finger without using the touch pen, may use an external mouse (not illustrated), or may use an external touch pad (not illustrated).

It should be noted that the UI for image generation illustrated in FIG. 3 is an example, and the positioning and size of the input area R1 and the output area R2, the screen regions where the input area R1 and the output area R2 are displayed, and the like are not limited to this example.

FIG. 4 is a diagram illustrating an input example of an input area R1 and an output example of an output area R2 according to the present embodiment. (A) of FIG. 4 illustrates an input example of the input area R1. As described above, an input of a rough sketch and letters is possible in the input area R1.

In the input example illustrated in (A) of FIG. 4, "ship" and "water surface" are input by hand as a rough sketch by the user. Here, the user wants to generate an image in which a lower part below the water surface is a rough sea and a plurality of birds is flying in the sky, but it is difficult to express the rough sea with a drawing, and it takes time and effort to draw a plurality of birds. In a case where it is difficult or it takes time and effort to express the objects with a drawing as described above, the user can input the letters. In the example illustrated in the drawing, the letters "rough ocean" are input to the lower part below the water surface by hand, and the letters "birds" are input to a part of the sky above the water surface by hand.

The image generation application detects letters from the input image of the rough sketch and the letters, and generates a prompt based on the letters. Then, the image generation application acquires the generated image generated by the image generation model 31 by inputting the input data based on the generated prompt and the rough sketch image to the image generation model 31. Then, the image generation application displays the acquired generated image in the output area R2.

(B) of FIG. 4 illustrates an example of the generated image displayed in the output area R2 as an output example of the output area R2. The generated image illustrated in this drawing is an image diagram drawn by imitating the generated image generated by the image generation model 31. In the example of the generated image illustrated in (B) of FIG. 4, an image in which a ship navigates on a rough sea and a plurality of birds is flying in the sky is generated according to the input example of the rough sketch and the letters illustrated in (A) of FIG. 4.

The generated image (generated image displayed in the output area R2) generated by the image generation application can also be used in other applications, and for example, the generated image can be copied and pasted and displayed in a window of other applications. The other applications are, for example, applications capable of inserting or pasting images, such as an application having a presentation creation function, an application having a document creation function, or an application having an image editing function.

### [Functional Configuration of Image Generation Processing]

Next, image generation processing of detecting letters, generating a prompt, and generating an image based on the generated prompt and the rough sketch image will be described in detail.

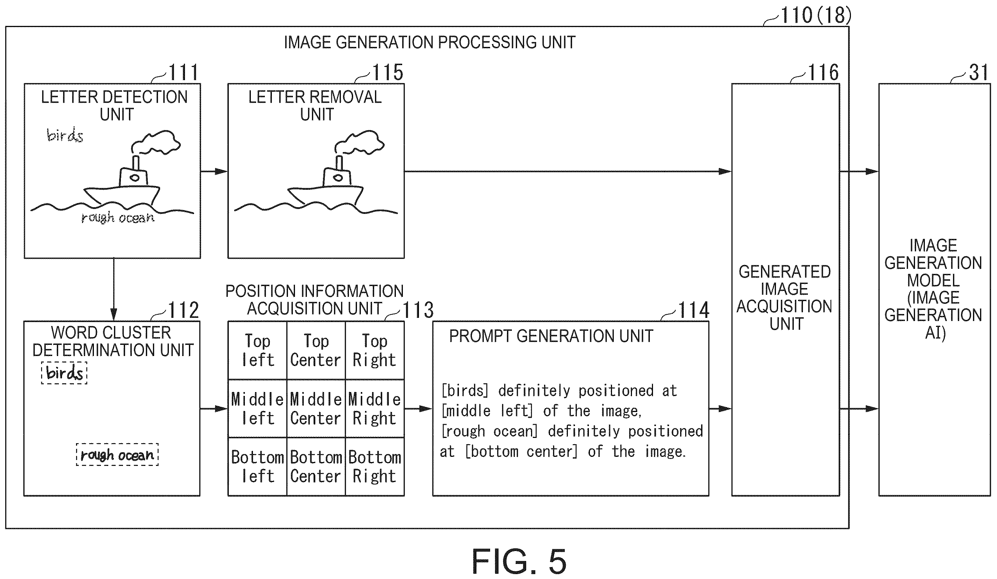

FIG. 5 is a block diagram illustrating an example of a functional configuration related to image generation processing according to the present embodiment. The image generation processing unit 110 illustrated in the drawing has a functional configuration in which the control unit 18 executes the image generation application to perform the image generation processing. The image generation processing unit 110 includes a letter detection unit 111, a word cluster determination unit 112, a position information acquisition unit 113, a prompt generation unit 114, a letter removal unit 115, and a generated image acquisition unit 116.

The letter detection unit 111 detects letters in an image including a rough sketch and letters input to the input area R1 (see FIG. 3). For example, the letter detection unit 111 detects letters by analyzing strokes of handwritten letters included in the image.

The word cluster determination unit 112 determines a letter group including one or a plurality of words among the letters detected by the letter detection unit 111 as a word cluster. For example, the word cluster determination unit 112 determines the word cluster based on the distance between the letters detected by the letter detection unit 111. In addition, the word cluster determination unit 112 sets a bounding box in a range (partial region) around a letter group for each word cluster.

In the example illustrated in the drawing, "birds" and "rough ocean" are determined as the word clusters, and the bounding boxes of each of the word clusters are indicated by squares. The word cluster determination unit 112 outputs information on the bounding box for each word cluster to the position information acquisition unit 113.

The position information acquisition unit 113 acquires position information indicating a position of the word cluster determined by the word cluster determination unit 112 in the image. For example, the position information acquisition unit 113 divides the range of the image into 9 ranges of 3 × 3, and determines the position of the bounding box of the word cluster from the divided ranges to acquire the position information. The determination of the position of the bounding box may be, for example, a determination based on a position of an upper left corner of the bounding box or a determination based on a center position of the bounding box.

In the example illustrated in the drawing, the position information acquisition unit 113 acquires "Middle Left" as the position information of "birds" and acquires "Bottom Center" as the position information of "rough ocean". The position information acquisition unit 113 outputs the acquired position information of the word cluster to the prompt generation unit 114.

The prompt generation unit 114 generates a prompt as an input sentence for the image generation model 31 based on the word cluster and the position information. For example, the prompt generation unit 114 generates a prompt including a word cluster and position information in a sentence. That is, the prompt generation unit 114 generates a prompt indicating an instruction to generate an image so that an image corresponding to the word cluster is positioned at the position corresponding to the position information acquired by the position information acquisition unit 113.

For example, the prompt generation unit 114 generates a prompt using a predetermined format. As the predetermined format, for example, a sentence such as "[word cluster] positioned at [position information]" is set in advance. The prompt generation unit 114 generates a prompt by applying the letters (word cluster) detected from the image and the position information thereof to the parts of [word cluster] and [position information] in the sentence.

In the example illustrated in the drawing, a sentence of "[word cluster] definitely positioned at [position] of the image" is set as the format for the prompt. The prompt generation unit 114 generates a prompt of "[birds] definitely positioned at [middle left] of the image, [rough ocean] definitely positioned at [bottom center] of the image."

Examples of these prompts are merely examples, and any format can be used for setting.

In the present embodiment, the position of the word cluster is determined by dividing the range of the image into 9 ranges of 3 × 3, but the present invention is not limited thereto, and the number of divisions of the range of the image can be freely set. In addition, the position of the word cluster may be defined by coordinates in the image.

The letter removal unit 115 generates an image in which the letters detected by the letter detection unit 111 are removed from the image, as an input image for the image generation model 31.

The generated image acquisition unit 116 inputs the input image (image of the rough sketch without letters) generated by the letter removal unit 115 and the prompt generated by the prompt generation unit 114 to the image generation model 31. The image generation model 31 generates and outputs an image based on the input input image (image of the rough sketch without letters) and prompt. As a result, the generated image acquisition unit 116 acquires the generated image output from the image generation model 31. In addition, the generated image acquisition unit 116 displays the acquired generated image in the output area R2 (see FIG. 3).

### [Operation of Prompt Generation Processing]

Next, an operation of the prompt generation processing executed by the image generation processing unit 110 will be described.

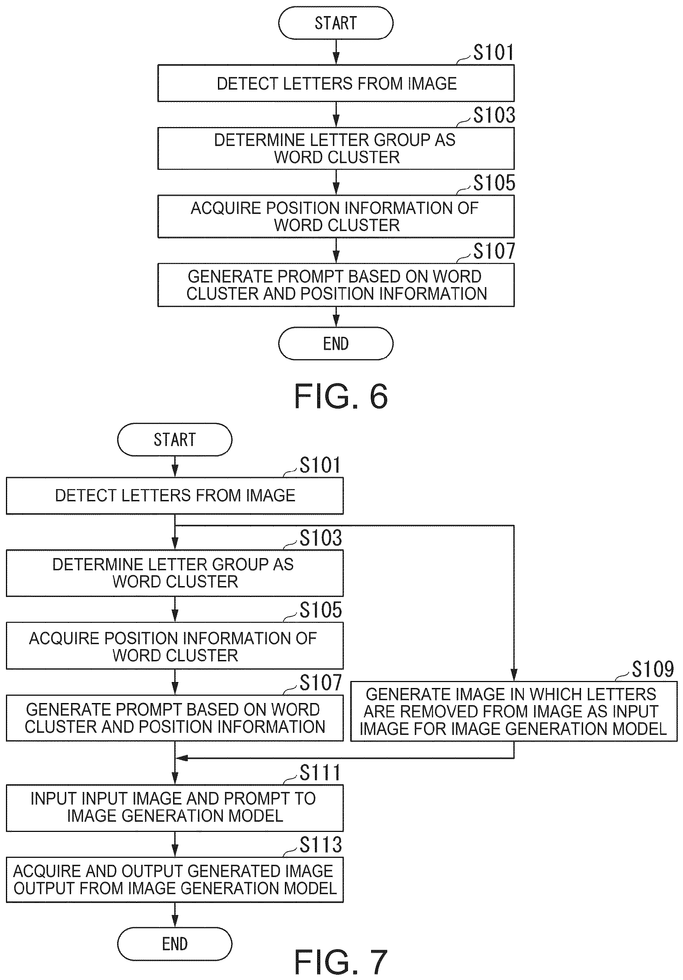

FIG. 6 is a flowchart illustrating an example of prompt generation processing according to the present embodiment.

(Step S101) The image generation processing unit 110 detects the letters in the image from the image including the rough sketch and the letters input to the input area R1 (see FIG. 3). Then, the process proceeds to the processing of step S103.

(Step S103) The image generation processing unit 110 determines a letter group including one or a plurality of words among the letters detected in step S101 as a word cluster. For example, the word cluster determination unit 112 sets a bounding box (partial region around a letter group) in a range of the letter group for each word cluster. Then, the process proceeds to the processing of step S105.

(Step S105) The image generation processing unit 110 acquires the position information indicating the position of the word cluster in the image determined in step S103. For example, the position information acquisition unit 113 divides the range of the image into 9 ranges of 3 × 3 (see FIG. 5), and determines the position of the bounding box of the word cluster from the divided ranges to acquire the position information. Then, the process proceeds to the processing of step S107.

(Step S107) A prompt as an input sentence for the image generation model 31 is generated based on the word cluster and the position information. For example, the image generation processing unit 110 generates a prompt including a word cluster and position information in the sentence (see FIG. 5).

### [Operation of Image Generation Processing]

Next, an operation of the image generation processing executed by the image generation processing unit 110 will be described.

FIG. 7 is a flowchart illustrating an example of the image generation processing according to the present embodiment. In this drawing, the same reference numerals are assigned to the processing corresponding to each processing of FIG. 6, and the description thereof will be omitted. The processing of steps S101 to S107 is prompt generation processing illustrated in FIG. 6.

(Step S109) When the image generation processing unit 110 detects the letters in the image from the image including the rough sketch and the letters input to the input area R1 (see FIG. 3) in step S101, the image generation processing unit 110 generates an image in which the detected letters are removed from the image as the input image for the image generation model 31. Then, the process proceeds to the processing of step S111.

(Step S111) The image generation processing unit 110 inputs the input image (image of the rough sketch without the letters) generated in step S109 and the prompt generated in step S107 to the image generation model 31. Then, the process proceeds to the processing of step S113.

Here, the image generation model 31 generates and outputs an image based on the input input image (image of the rough sketch without the letters) and prompt.

(Step S113) The image generation processing unit 110 acquires the generated image output from the image generation model 31. In addition, the image generation processing unit 110 displays the acquired generated image in the output area R2 (see FIG. 3).

### [Another Input Example of Image Generation Processing]

Next, another input example of the image generation processing in the present embodiment will be described. In the present embodiment, as in the example illustrated in FIG. 4, the image can be generated from the input of the rough sketch and the letters, but the image can also be generated from the input of only the rough sketch or only the letters. In a case of only the rough sketch, the prompt is not generated because letters are not detected from the image, and only the rough sketch image is input to the image generation model 31. In a case of only the letters, the prompt is generated, and an image without a rough sketch and the generated prompt are input to the image generation model 31.

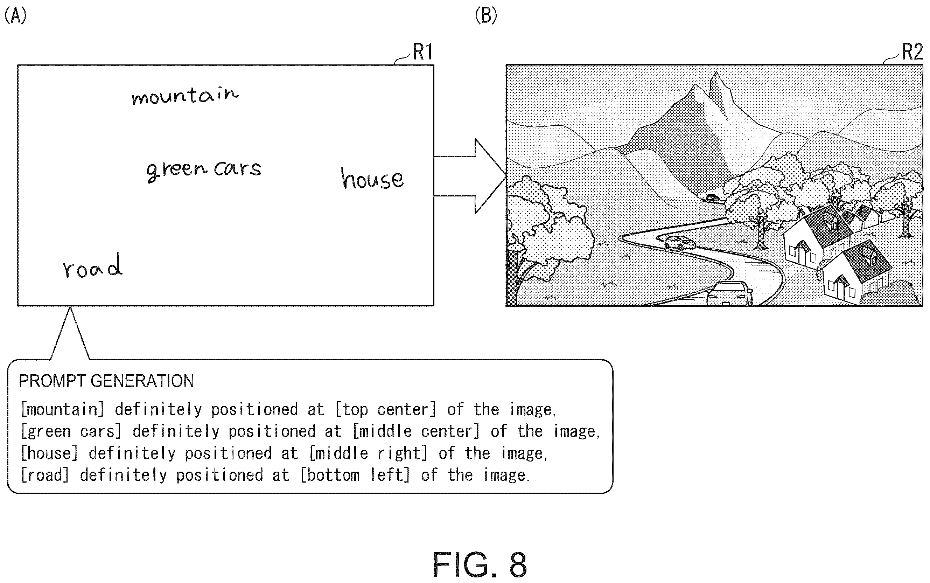

FIG. 8 is a diagram illustrating another example of an input of the input area R1 and an output of the output area R2 according to the present embodiment. (A) of FIG. 8 illustrates an input example of the input area R1, and (B) of FIG. 8 illustrates an output example of the output area R2.

In the input example illustrated in (A) of FIG. 8, there is no input of a rough sketch, and the letters "mountain", "green cars", "house", and "road" are input by hand. In this case, the prompt to be generated is, for example, "[mountain] definitely positioned at [top center] of the image, [green cars] definitely positioned at [middle center] of the image, [house] definitely positioned at [middle right] of the image, [road] definitely positioned at [bottom left] of the image."

In the example of the generated image illustrated in (B) of FIG. 8, an image in which a house is present on the right of a road on which a plurality of cars (green cars) is running and a mountain rises in the distance is generated according to the input example of the letters illustrated in (A) of FIG. 8. The generated image illustrated in this drawing is an image diagram drawn by imitating the generated image generated by the image generation model 31.

### [Input Example of Letters]

In addition, in a case of inputting the letters, there is also a case where it is desired to put the letters themselves into the image in addition to generating the image corresponding to the letters (word cluster). When the word cluster includes a specific symbol, the image generation processing unit 110 (prompt generation unit 114) generates a prompt indicating an instruction to position the word cluster as letters at a position corresponding to the position information. The specific symbol can be freely set, but in the present embodiment, the specific symbol is set to ().

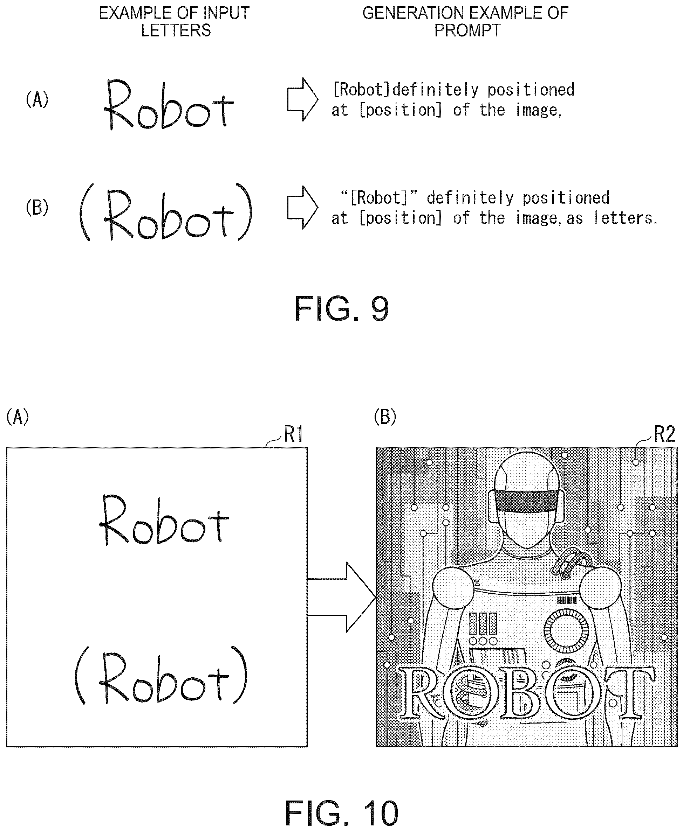

FIG. 9 is a diagram illustrating examples of a prompt when a specific symbol is present and when the specific symbol is not present. (A) of FIG. 9 is an example when there is no specific symbol, the letters input by hand are "Robot", and the prompt to be generated is, for example, "[Robot] definitely positioned at [position] of the image." [position] is a part in which position information is applied.

(B) of FIG. 9 is an example when there is a specific symbol, and the letters input by hand are "(Robot)". Since the word cluster "(Robot)" includes the specific symbol (), the prompt to be generated is, for example, "'[Robot]' definitely positioned at [position] of the image, as letters." That is, when the specific symbol () is included, generating the word cluster as letters is described in the prompt.

FIG. 10 is a diagram illustrating an example of an image generated by handwritten input of the letters illustrated in FIG. 9. (A) of FIG. 10 illustrates an input example of the input area R1, and (B) of FIG. 10 illustrates an output example of the output area R2.

In the input example illustrated in (A) of FIG. 10, there is no input of a rough sketch, and the letters [Robot] are input on the top and the letters "(Robot)" are input on the bottom in letters by hand. The prompt to be generated from the letters (word cluster) input by hand is as illustrated in FIG. 9, and generating the word cluster as letters because the specific symbol () is included in the "(Robot)".

In the example of the generated image illustrated in (B) of FIG. 10, an image including the image of the robot and "ROBOT" as letters is generated according to the input example of the letters illustrated in (A) of FIG. 10. The generated image illustrated in this drawing is an image diagram drawn by imitating the generated image generated by the image generation model 31.

### [Summary of First Embodiment]

As described above, the information processing apparatus 10 according to the present embodiment detects the letters in the image and determines the letter group including one or a plurality of words among the detected letters as the word cluster. In addition, the information processing apparatus 10 acquires position information indicating a position of the word cluster in the image, and generates a prompt as an input sentence for the image generation model 31 based on the word cluster and the position information.

As a result, the information processing apparatus 10 automatically generates a prompt corresponding to the position of the letter group (word cluster) by detecting the letters from the image. Therefore, in a case of a person who is not good at drawing, or in a case where it is difficult or it takes time and effort to express the objects with a drawing, the information processing apparatus 10 can cause the image generation model 31 to generate an image by inputting letters on an image such as a rough sketch, without drawing. Therefore, the information processing apparatus 10 can improve convenience in a case of using the image generation AI.

If the image including the letters is input to the image generation model 31 as it is (the letters are also input as an image), in the related art, a case where the letter part is generated as an image and a case where the letter part is generated as the letters themselves are randomly generated. On the other hand, in the present embodiment, the information processing apparatus 10 separates the letters from the image and generates a prompt so that the intended image is generated. In addition, since the information processing apparatus 10 generates a prompt based on the word cluster and the position information thereof, it is not necessary for the user to create a prompt describing the position in the image where the objects are to be positioned in a sentence, and the convenience is excellent.

For example, the information processing apparatus 10 generates a prompt including a word cluster and position information in a sentence.

As a result, the information processing apparatus 10 can generate a prompt including the word cluster and the position information thereof without the user creating a prompt describing the position in the image where the objects are to be positioned in a sentence, and therefore the convenience is excellent.

More specifically, the information processing apparatus 10 generates a prompt indicating an instruction to generate an image so that an image corresponding to the word cluster is positioned at a position corresponding to the position information.

As a result, the information processing apparatus 10 can generate a prompt indicating an instruction so that the image intended by the user is positioned at an appropriate position in the generated image generated by the image generation model 31 based on the letters input by the user.

In addition, when a specific symbol is included in the word cluster, the information processing apparatus 10 generates a prompt indicating an instruction to position the word cluster as letters at a position corresponding to the position information.

As a result, the user only needs to input the letters with the specific symbol even when the user wants to put the letters themselves in the generated image generated by the image generation model 31, and therefore the information processing apparatus 10 has excellent convenience.

For example, the information processing apparatus 10 detects letters by analyzing handwritten strokes included in the image.

As a result, the information processing apparatus 10 can appropriately generate the prompt only by the user inputting letters by hand.

In addition, the information processing apparatus 10 generates an image in which the detected letters are removed from the image as an input image for the image generation model 31.

As a result, the information processing apparatus 10 can appropriately input an image to the image generation model 31 by removing the letters from the image even when the image includes a rough sketch and letters. Therefore, the information processing apparatus 10 can prevent the occurrence of random generation of the letters as an image or the letters themselves.

In addition, the information processing apparatus 10 acquires the generated image output from the image generation model 31 by inputting the input image in which the letters are removed from the image and the generated prompt to the image generation model 31.

As a result, the information processing apparatus 10 automatically generates a prompt corresponding to a position of a letter group (word cluster) by detecting letters from the image, and inputs the generated prompt and the image in which the letters are removed to the image generation model 31. Therefore, in a case where a person who is not good at drawing or in a case where it is difficult or it takes time and effort to express the objects with a drawing, the information processing apparatus 10 can cause the image generation model 31 to generate an image by inputting letters on an image such as a rough sketch, without drawing. Therefore, the information processing apparatus 10 can improve convenience in a case of using the image generation AI. In addition, since the information processing apparatus 10 removes the letters from the image and inputs the image to the image generation model 31, it is possible to acquire a generated image with higher accuracy than when the letters remain in the image.

In addition, the prompt generation method in the information processing apparatus 10 according to the present embodiment includes a step of detecting letters in an image, a step of determining, as a word cluster, a letter group including one or a plurality of words among the detected letters, a step of acquiring position information indicating a position of the determined word cluster in the image, and a step of generating a prompt as an input sentence for an image generation model 31 based on the word cluster and the position information by a control unit 18 (image generation processing unit 110).

As a result, in the prompt generation method in the information processing apparatus 10, the prompt corresponding to the position of the letter group (word cluster) is automatically generated by detecting the letters from the image. Therefore, in a case where a person who is not good at drawing or in a case where it is difficult or it takes time and effort to express the objects with a drawing, the information processing apparatus 10 can cause the image generation model 31 to generate an image by inputting letters on an image such as a rough sketch, without drawing. Therefore, the prompt generation method in the information processing apparatus 10 can improve convenience in a case of using the image generation AI.

In addition, according to the prompt generation method in the information processing apparatus 10, since the letters are separated from the image to generate a prompt, when the image including the letters is input to the image generation model 31 as it is (the letters are also input as an image), both a case where the letter part is generated as an image and a case where the letter part is generated as the letters themselves are not randomly generated, and thus the intended image is generated. In addition, according to the prompt generation method in the information processing apparatus 10, since a prompt based on the word cluster and the position information thereof is generated, it is not necessary for the user to create a prompt describing the position in the image where the objects are to be positioned in a sentence, and the convenience is excellent.

In addition, the image generation method in the information processing apparatus 10 according to the present embodiment includes a step of detecting letters in an image, a step of determining, as a word cluster, a letter group including one or a plurality of words among the detected letters, a step of acquiring position information indicating a position of the determined word cluster in the image, a step of generating a prompt as an input sentence for an image generation model 31 based on the word cluster and the position information, a step of generating an image in which the detected letters are removed from the image as an input image for the image generation model 31, and a step of acquiring a generated image output from the image generation model 31 by inputting the generated input image and the generated prompt to the image generation model 31, via a control unit 18 (image generation processing unit 110).

As a result, in the image generation method in the information processing apparatus 10, a prompt corresponding to a position of a letter group (word cluster) is automatically generated by detecting letters from the image, and the generated prompt and the image in which the letters are removed are input to the image generation model 31. Therefore, in a case where a person who is not good at drawing or in a case where it is difficult or it takes time and effort to express the objects with a drawing, the information processing apparatus 10 can cause the image generation model 31 to generate an image by inputting letters on an image such as a rough sketch, without drawing. Therefore, the image generation method in the information processing apparatus 10 can improve convenience in a case of using the image generation AI.

### <Second Embodiment>

Next, a second embodiment of the present invention will be described.

In the first embodiment, an example in which the information processing apparatus 10 can cause the image generation model 31 to generate an image by the user inputting letters instead of the image on the image such as the rough sketch has been described. On the other hand, in the present embodiment, another input method for letters will be described.

When the letters are input on the image such as the rough sketch as in the first embodiment, and the user describes the content of the image to be generated in more detail in letters, the sentence may be long and the area occupied by the letters in the input area R1 may be large. In this case, there is a concern that the position and the size indicated by the letters may not be recognized, or that the region for inputting other letters or a rough sketch is insufficient.

Therefore, in the present embodiment, a region indicating the range of an image to be input to the image generation model 31 (hereinafter, referred to as a "canvas") and an outer region around the canvas (hereinafter, referred to as an "outer area") are defined in the input area R1, and the letters can also be input to the outer area. As a result, when an image to be positioned in the generated image is input in letters, an input method can be adopted in which the size and position of the image to be positioned are independent of the amount and size of the letters.

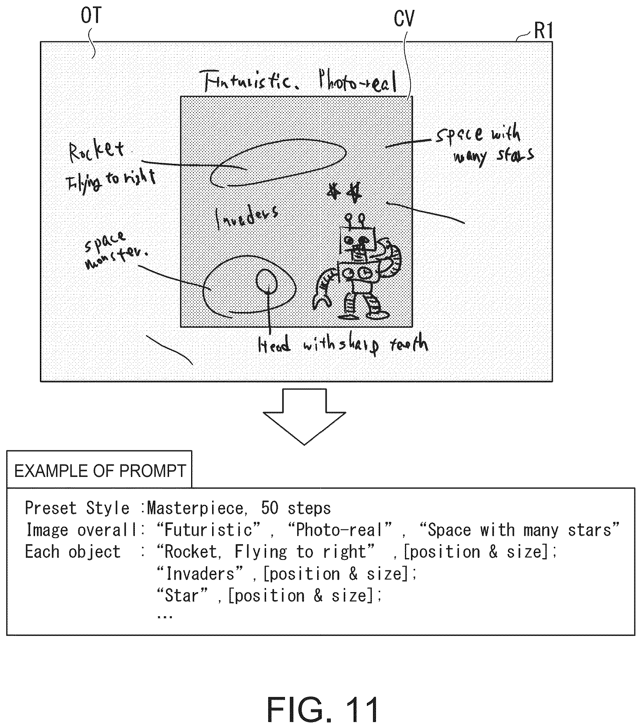

FIG. 11 is a diagram illustrating an input example of an input area and a generation example of a prompt according to the present embodiment. The image generation UI according to the present embodiment is basically the same as the image generation UI illustrated in FIG. 3, but is different in that the input area R1 is divided into a canvas CV and an outer area OT around the canvas CV. In the canvas CV, a rough sketch and letters can be input in the same manner as in the input area R1 in the first embodiment. On the other hand, in the outer area OT, letters indicating an image to be positioned in the canvas CV and letters indicating the content for the entire canvas CV can be input.

In the outer area OT, letters (word cluster) indicating an image to be positioned in the canvas CV are connected to one end of a first input line that is input by hand across the canvas CV and the outer area OT. The other end of the first input line is connected to a second input line (circle line drawn by hand) that is input by hand. The second input line is a line indicating a position and a size in the canvas CV.

That is, the first input line connected to the letters (word cluster) in the outer area OT and the second input line (circle line drawn by hand) in the canvas CV is a connection line that connects the letters (word cluster) and the second input line (hereinafter, referred to as a "connector"), and corresponds to a leader line that describes an image to be positioned at a position and with a size indicated by the second input line in the canvas CV.

In the example illustrated in this drawing, each of the letters (word cluster) of "Rocket, Flying to right", "space monster", and "Head with sharp teeth" is connected to one end of the connector, and the position and the size in the canvas CV are designated by a second input line (circle line drawn by hand) which is the connection destination of the other end of each connector. In this case, a prompt for instructing so that the image corresponding to the letters (word cluster) is positioned at the position and the size designated by the second input line is generated.

In addition, the letters (word cluster) of "Space with many stars" are connected to one end of the connector, but the other end is not connected to the second input line, and the connection destination of the other end is the canvas CV. In this case, a prompt for instructing so that the image corresponding to the letters (word cluster) is applied to the entire range of the canvas CV is generated.

In addition, the letters (word clusters) of "Futuristic" and "Photo-real" are not connected to the connector. In this case as well, a prompt for instructing so that the image corresponding to the letters (word clusters) is applied to the entire range of the canvas CV is generated.

Here, although there is a first input line that is not connected to letters (word cluster) in this drawing, the first input line is excluded from the target for prompt generation.

It should be noted that a prompt for instructing so that "Invaders", which are letters (word cluster) in the canvas CV, is positioned corresponding to the position information (for example, the position and the size) of "Invaders" in the canvas CV, is generated.

In addition, the rough sketches (the drawing of the robot and the drawing of the star) in the canvas CV are input to the image generation model 31 after the letters and the input lines are removed, and thus the rough sketches are excluded from the target for the prompt generation.

### [Functional Configuration of Image Generation Processing]

Next, a functional configuration of the image generation processing according to the present embodiment will be described. The system configuration of the information processing system SYS and the hardware configuration of the information processing apparatus 10 according to the present embodiment are the same as the configurations illustrated in FIGS. 1 and 2 described in the first embodiment, and the descriptions thereof will be omitted. In the present embodiment, a functional configuration of the image generation processing executed by the information processing apparatus 10 is different from the functional configuration of the first embodiment.

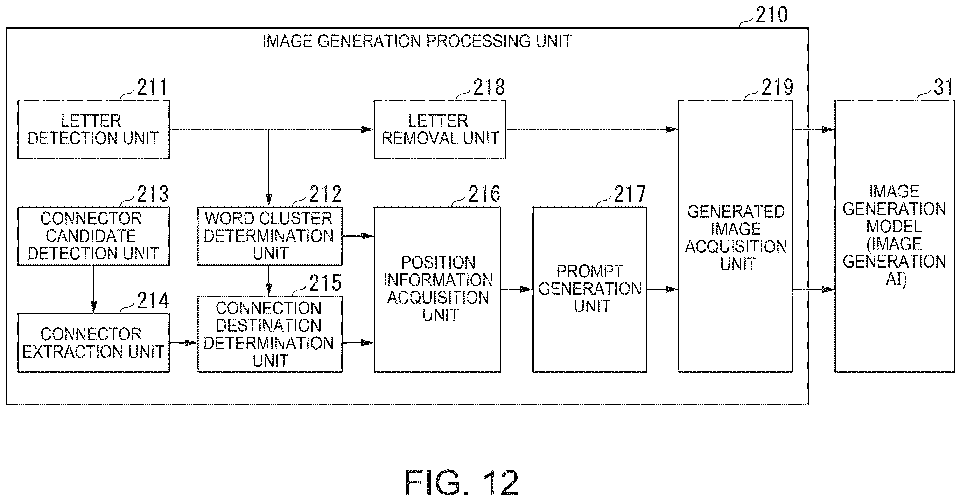

FIG. 12 is a block diagram illustrating an example of a functional configuration related to image generation processing according to the present embodiment. The image generation processing unit 210 illustrated in the drawing has a functional configuration in which the control unit 18 executes the image generation application to perform the image generation processing. The image generation processing unit 210 includes a letter detection unit 211, a word cluster determination unit 212, a connector candidate detection unit 213, a connector extraction unit 214, a connection destination determination unit 215, a position information acquisition unit 216, a prompt generation unit 217, a letter removal unit 218, and a generated image acquisition unit 219.

The letter detection unit 211 detects the letters input to the canvas CV and the letters input to the outer area OT in a distinguishable manner. As a method of detecting the letters, a method of detecting the letters by analyzing strokes of the handwritten letters included in the image, similarly to the letter detection unit 111 illustrated in FIG. 5 described in the first embodiment, can be applied.

The word cluster determination unit 212 determines a letter group including one or a plurality of words among the letters detected by the letter detection unit 211 as a word cluster. For example, similarly to the word cluster determination unit 112 illustrated in FIG. 5 described in the first embodiment, the word cluster determination unit 212 determines a word cluster based on the distance between the letters, and sets a bounding box in a range (partial region) around a letter group for each word cluster.

The connector candidate detection unit 213 (an example of a line detection unit) detects a first input line (candidate for connector) that is input across the canvas CV and the outer area OT. For example, the connector candidate detection unit 213 (an example of a line detection unit) detects a line that is longer than a predetermined threshold value among the lines input across the canvas CV and the outer area OT as a first input line (candidate for connector), and excludes a line that is equal to or shorter than the predetermined threshold value from the candidates for the connector.

The connector extraction unit 214 (an example of an extraction unit) extracts a connector (an example of a connection line) of which one end is connected to the word cluster in the outer area OT and the word cluster connected to the connector among the first input lines (candidates for connectors) detected by the connector candidate detection unit 213.

For example, the connector extraction unit 214 determines the connection between the first input line and the word cluster based on the distance between one end of the first input line (candidate of connector) detected by the connector candidate detection unit 213 and the word cluster, and extracts the first input line connected to the word cluster as the connector.

Specifically, the connector extraction unit 214 determines the connection between the first input line and the word cluster based on whether or not one end of the first input line (candidate for the connector) enters a bounding box indicating a range around the letter group of the word cluster, and extracts the first input line of which one end of the first input line enters the bounding box of the word cluster, as the connector.

The connection destination determination unit 215 determines the connection destination of the other end of the connector extracted by the connector extraction unit 214. For example, the connection destination determination unit 215 determines whether or not the other end of the connector is connected to the second input line input to the canvas CV, and, determines that the connection destination of the other end of the connector is the second input line, when it is determined that the other end of the connector is connected to the second input line.

Specifically, the connection destination determination unit 215 determines the connection between the other end of the connector and the second input line based on, for example, the distance between the other end of the connector and the second input line. For example, the connection destination determination unit 215 may determine the connection between the other end of the connector and the second input line based on whether or not the other end of the connector enters the bounding box indicating the range in which the second input line is drawn.

In addition, the connection destination determination unit 215 determines that the connection destination of the other end of the connector is the canvas CV, when it is determined that the other end of the connector is not connected to the second input line.

The position information acquisition unit 216 acquires the position information indicating the position and the size of the word cluster in the canvas CV (image) based on the word cluster and the connector extracted by the connector extraction unit 214 and the connection destination of the other end of the connector determined by the connection destination determination unit 215. For example, when it is determined that the connection destination of the other end of the connector is the second input line, the position information acquisition unit 216 acquires the position information indicating the position and the size determined according to the range of the stroke of the second input line. For example, the position information acquisition unit 216 acquires the center position and the range (size) of the bounding box of the second input line as the position information indicating the position and the size of the word cluster in the canvas CV (image).

The prompt generation unit 217 generates a prompt as an input sentence for the image generation model 31 based on the word cluster and the position information (position and size) corresponding to the connection destination of the other end of the connector to which one end of the connector is connected to the word cluster.

For example, the prompt generation unit 217 generates a prompt for instructing so that the image corresponding to the word cluster determined that the connection destination of the other end of the connector is the second input line is positioned at a position and a size determined according to the range of the stroke of the second input line. In addition, the prompt generation unit 217 generates a prompt for instructing so that the image corresponding to the word cluster in which the connection destination of the other end of the connector is determined to be the canvas CV is applied to the entire range of the canvas CV.

The prompt generation unit 217 generates a prompt for instructing so that an image corresponding to a word cluster that is not extracted by the connector extraction unit 214 (that is, not connected to one end of the connector) among the word clusters in the outer area OT is applied to the entire range of the canvas CV.

The letter removal unit 218 generates an image in which the letters, the first input line, and the second input line detected in the canvas CV are removed from the image, as an input image for the image generation model 31. That is, the input image for the image generation model 31 is an image in which information other than the image, such as the letters, the first input line, and the second input line, is removed from the image in the range of the canvas CV.

The generated image acquisition unit 219 inputs the input image (image of the rough sketch in which the letters, the first input line, and the second input line are removed) generated by the letter removal unit 218 and the prompt generated by the prompt generation unit 217 to the image generation model 31. The image generation model 31 generates and outputs an image based on the input input image (image of the rough sketch without letters) and prompt. As a result, the generated image acquisition unit 219 acquires the generated image output from the image generation model 31. In addition, the generated image acquisition unit 219 displays the acquired generated image in the output area R2 (see FIG. 3).

In addition, when a rough sketch is not drawn, the generated image acquisition unit 219 may acquire the generated image output from the image generation model 31 by inputting at least the prompt generated by the prompt generation unit 217 to the image generation model 31. In addition, in a case where the letters, the first input line, and the second input line are not input, the generated image acquisition unit 219 may acquire the generated image output from the image generation model 31 by inputting the image of the rough sketch to the image generation model 31.

### [Operation of Prompt Generation Processing]

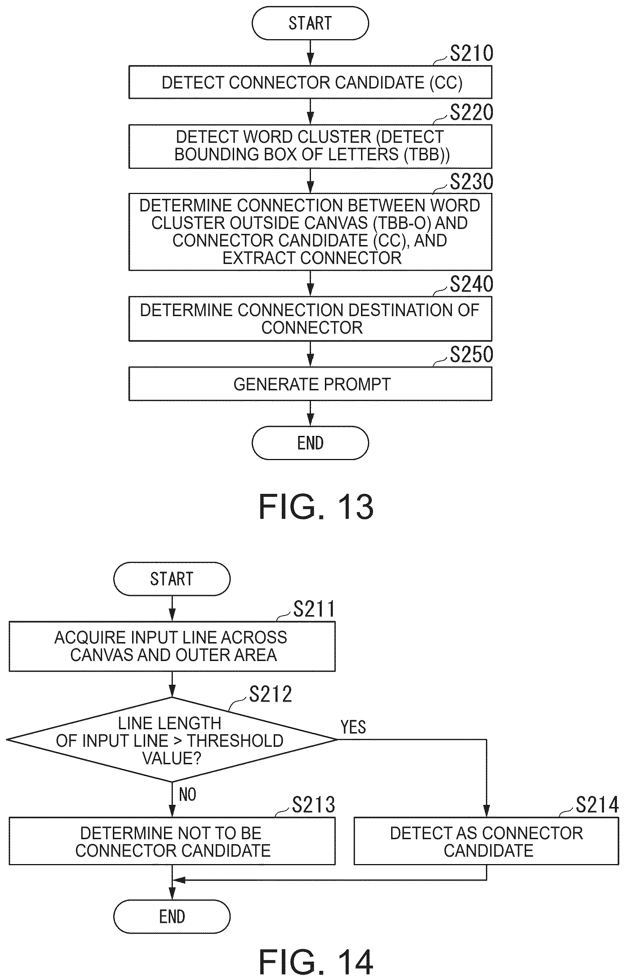

Next, an operation of the prompt generation processing executed by the image generation processing unit 210 will be described with reference to FIGS. 13 to 17. FIG. 13 is a flowchart illustrating an example of prompt generation processing according to the present embodiment. Since the prompt generation processing for the letters input in the canvas CV is the same as the prompt generation processing in the first embodiment, the operation of the prompt generation processing when the letters are input to the outside of the canvas CV using the connector will be described here.

(Step S210) The image generation processing unit 210 detects the candidate for the connector from the input area R1. Hereinafter, the candidates for the connector may be referred to as connector candidates (CC). The details of the connector candidate detection processing of step S210 will be described with reference to FIG. 14. FIG. 14 is a flowchart illustrating an example of connector candidate detection processing according to the present embodiment.

(Step S211) The image generation processing unit 210 acquires an input line across the canvas CV and the outer area OT among the strokes of the rough sketch, the letters, and the like input to the input area R1. Then, the process proceeds to the processing of step S212.

(Step S212) The image generation processing unit 210 determines whether or not the line length of the input line acquired in step S211 is longer than a threshold value set in advance. The threshold value is set in advance to exclude a line that is too short from the candidates for the connector. When the image generation processing unit 210 determines that the line length of the input line is equal to or less than the threshold value set in advance (NO), the process proceeds to processing of step S213. On the other hand, when the image generation processing unit 210 determines that the line length of the input line is longer than the threshold value set in advance (YES), the process proceeds to the processing of step S214.

(Step S213) The image generation processing unit 210 determines that an input line having a line length that is equal to or less than the threshold value set in advance is not a candidate (first input line) of the connector.

(Step S214) The image generation processing unit 210 detects an input line longer than the threshold value set in advance as a candidate for the connector (first input line) and adds the input line to the connector candidate list. When the image generation processing unit 210 ends the connector candidate detection processing, the process proceeds to the processing of step S220 in FIG. 13.

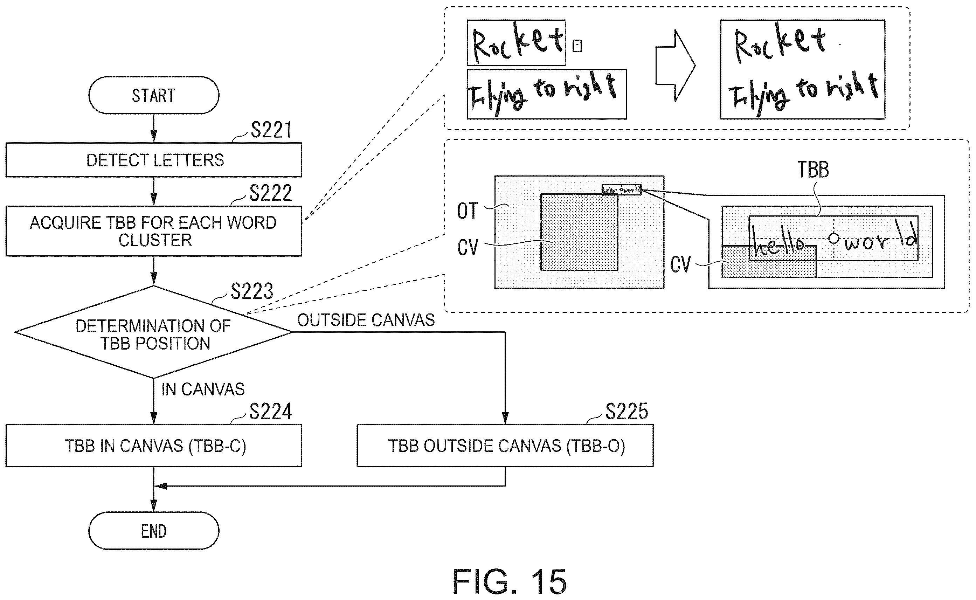

(Step S220) The image generation processing unit 210 detects the word cluster from the input area R1. Specifically, the image generation processing unit 210 detects the letters input in the canvas CV and the letters input in the outer area OT in a distinguishable manner, and detects the word cluster in the canvas CV and the word cluster in the outer area OT. The details of the word cluster detection processing of step S220 will be described with reference to FIG. 15. FIG. 15 is a flowchart illustrating an example of word cluster detection processing according to the present embodiment.

(Step S221) The image generation processing unit 210 detects the letters from the strokes of the rough sketch, the letters, and the like input to the input area R1. Then, the process proceeds to the processing of step S222.

(Step S222) The image generation processing unit 210 determines a letter group including one or a plurality of words among the letters detected in step S221 as a word cluster, and acquires a bounding box in a range (partial region) around the letter group for each word cluster. For example, the image generation processing unit 210 determines two word clusters of "Rocket," and "Flying to right" input in two lines based on the distance between the letters, and then further determines two word clusters of "Rocket," and "Flying to right" as a single word cluster "Rocket, Flying to right" based on a time series of input (drawing) and the distance between the word clusters to acquire a bounding box. Hereinafter, the bounding box of the word cluster may be referred to as a text bounding box (TBB). Then, the process proceeds to the processing of step S223.

(Step S223) The image generation processing unit 210 determines whether the position of the bounding box (TBB) of the word cluster acquired in step S222 is in the canvas CV or outside the canvas CV. For example, the image generation processing unit 210 determines whether or not a center position of a bounding box (TBB) of the word cluster is in the canvas CV. When the image generation processing unit 210 determines that the center position of the bounding box (TBB) of the word cluster is in the canvas CV, the process proceeds to the processing of step S224. On the other hand, when the image generation processing unit 210 determines that the center position of the bounding box (TBB) of the word cluster is outside the canvas CV, the process proceeds to the processing of step S225.

(Step S224) The image generation processing unit 210 detects that the word cluster is in the canvas CV, and adds the word cluster to the bounding box (TBB) list of the word clusters in the canvas CV. Hereinafter, the bounding box of the word cluster in the canvas CV may be referred to as a text bounding box in canvas (TBB-C).

(Step S225) The image generation processing unit 210 detects that the word cluster is outside the canvas CV, and adds the word cluster to the bounding box (TBB) list of the word clusters in the outer area OT. Hereinafter, the bounding box of the word cluster in the outer area OT may be referred to as a text bounding box in outside area (TBB-O).

When the image generation processing unit 210 ends the word cluster detection processing, the process proceeds to processing of step S230 in FIG. 13.

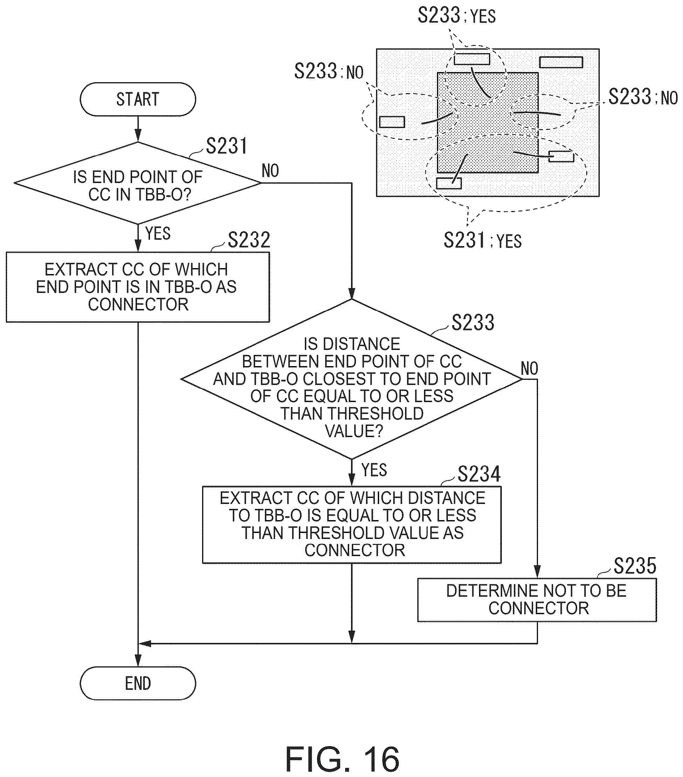

(Step S230) The image generation processing unit 210 determines the connection between the word cluster outside the canvas (TBB-O) and the connector candidate (CC), and extracts the connector. The details of the connector extraction processing of step S230 will be described with reference to FIG. 16. FIG. 16 is a flowchart illustrating an example of connector extraction processing according to the present embodiment.

(Step S231) The image generation processing unit 210 determines whether or not an end point (one end) of the connector candidate (CC) enters the bounding box of the word cluster in the outer area OT (TBB-O). When the image generation processing unit 210 determines that the end point (one end) of the connector candidate (CC) enters the bounding box of the word cluster in the outer area OT (TBB-O) (YES), the process proceeds to the processing of step S232. On the other hand, when the image generation processing unit 210 determines that the end point (one end) of the connector candidate (CC) does not enter the bounding box of the word cluster in the outer area OT (TBB-O) (NO), the process proceeds to the processing of step S233.

(Step S232) The image generation processing unit 210 extracts, as a connector connected to the word cluster, a connector candidate (CC) of which an end point is in a bounding box of the word cluster in the outer area OT (TBB-O).

(Step S233) The image generation processing unit 210 determines whether or not a distance between an end point (one end) of the connector candidate (CC) and the bounding box (TBB-O) of the word cluster closest to the end point is equal to or less than a threshold value. When the image generation processing unit 210 determines that the distance between the end point (one end) of the connector candidate (CC) and the bounding box (TBB-O) of the word cluster closest to the end point is equal to or less than the threshold value (YES), the process proceeds to the processing of step S234. On the other hand, when the image generation processing unit 210 determines that the distance between the end point (one end) of the connector candidate (CC) and the bounding box (TBB-O) of the word cluster closest to the end point is not equal to or less than the threshold value (NO), the process proceeds to the processing of step S235.

(Step S234) The image generation processing unit 210 extracts the connector candidate (CC) of which the distance to the bounding box (TBB-O) of the word cluster is equal to or less than the threshold value, as the connector connected to the word cluster.

(Step S235) The image generation processing unit 210 determines that the connector candidate (CC) of which the distance to the bounding box (TBB-O) of the word cluster is not equal to or less than the threshold value is not the connector.

The image generation processing unit 210 performs the connector extraction processing illustrated in this drawing on each of the connector candidates (CC) detected in step S210, and the process proceeds to the processing of step S240 in FIG. 13.

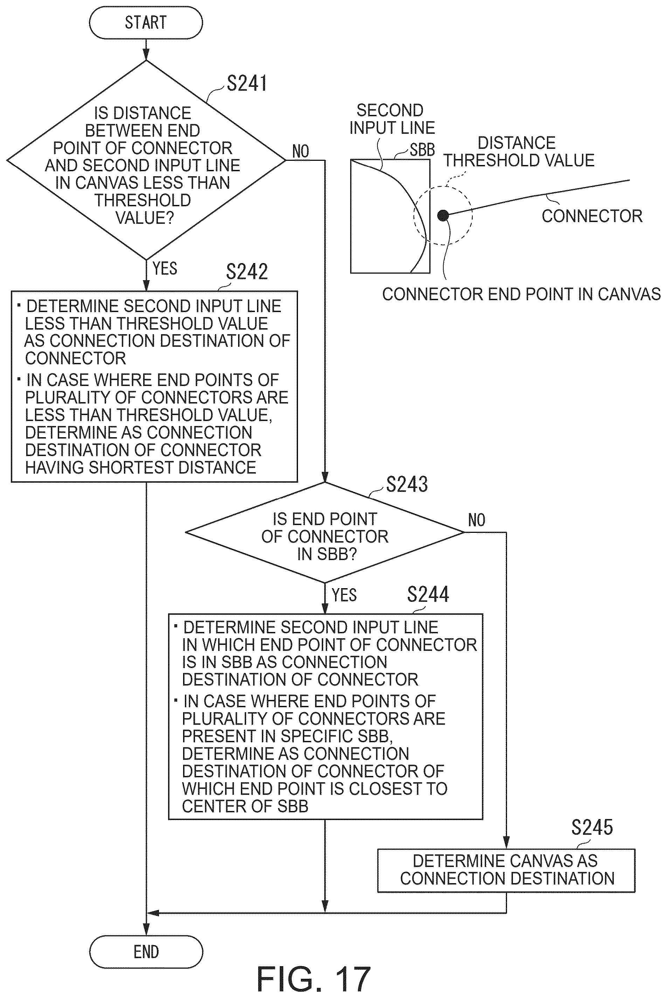

(Step S240) The image generation processing unit 210 determines the connection destination of the connector extracted in step S230. The details of the connector connection destination determination processing of step S240 will be described with reference to FIG. 17. FIG. 17 is a flowchart illustrating an example of connector connection destination determination processing according to the present embodiment.

(Step S241) The image generation processing unit 210 determines whether or not the distance between the end point (the other end) of the connector and the second input line in the canvas CV is less than a threshold value. When the image generation processing unit 210 determines that the distance between the end point (the other end) of the connector and the second input line in the canvas CV is less than the threshold value (YES), the process proceeds to the processing of step S242. On the other hand, when the image generation processing unit 210 determines that the distance between the end point (the other end) of the connector and the second input line in the canvas CV is equal to or greater than the threshold value (NO), the process proceeds to the processing of step S243.

(Step S242) The image generation processing unit 210 determines the second input line of which the distance to the end point (the other end) of the connector is determined to be less than the threshold value as the connection destination of the connector. In addition, the image generation processing unit 210 determines the second input line of which the distance to the end points (the other ends) of a plurality of the connectors is determined to be less than the threshold value as the connection destination of the connector having the shortest distance.

(Step S243) The image generation processing unit 210 determines whether or not the end point (the other end) of the connector enters the bounding box indicating the range in which the second input line is drawn. Hereinafter, a bounding box indicating a range in which the second input line is drawn may be referred to as a stroke bounding box (SBB). When the image generation processing unit 210 determines that the end point (the other end) of the connector enters the bounding box (SBB) of the second input line (YES), the process proceeds to the processing of step S244. On the other hand, when the image generation processing unit 210 determines that the end point (the other end) of the connector does not enter the bounding box (SBB) of the second input line (NO), the process proceeds to the processing of step S245.

(Step S244) The image generation processing unit 210 determines the second input line of which the end point (the other end) of the connector is in the bounding box (SBB) as the connection destination of the connector. In addition, when the end points (the other ends) of the plurality of connectors are present in the bounding box (SBB) of the specific second input line, the image generation processing unit 210 determines the second input line of which end point (the other end) is closest to the center of the bounding box (SBB) as the connection destination of the connector.

(Step S245) When the end point (the other end) of the connector does not enter the bounding box (SBB) of the second input line, the image generation processing unit 210 determines the canvas CV as the connection destination of the connector.

The image generation processing unit 210 performs the connector connection destination determination processing illustrated in this drawing on each of the connectors extracted in step S230, and the process proceeds to the processing of step S250 in FIG. 13.

(Step S250) The image generation processing unit 210 generates a prompt as an input sentence for the image generation model 31 based on the position information (position and size) corresponding to the connection destination of the other end of the connector of which one end is connected to the word cluster.

In addition, the image generation processing according to the present embodiment is basically a part of the prompt generation processing in the first embodiment, and the prompt generation processing illustrated in FIG. 13 is added. For example, the image generation processing unit 210 generates an image in which the letters, the first input line, and the second input line detected in the canvas CV are removed from the image as an input image to the image generation model 31, and inputs the input image and the generated prompt to the image generation model 31. As a result, the image generation processing unit 210 acquires the generated image output from the image generation model 31.

### [Summary of Second Embodiment]

As described above, the information processing apparatus 10 according to the present embodiment includes the input area R1 (an example of an input reception unit) that receives the input to the canvas CV (an example of a first region) indicating the range of the image to be input to the image generation model 31 and the outer area OT (an example of a second region) indicating the predetermined range outside the canvas CV. The information processing apparatus 10 detects a first input line (candidate for connector) that is input across the canvas CV and the outer area OT. In addition, the information processing apparatus 10 detects the letters input in the canvas CV and the letters input in the outer area OT in a distinguishable manner, and determines a letter group including one or a plurality of words among the detected letters as a word cluster. In addition, the information processing apparatus 10 extracts a connector (an example of a connection line) of which one end is connected to the word cluster in the outer area OT among the detected first input lines (candidates for connectors), and the word cluster connected to the connector. Further, the information processing apparatus 10 determines a connection destination of the other end of the extracted connector. Then, the information processing apparatus 10 generates a prompt as an input sentence for the image generation model 31 based on the extracted word cluster and connector, and the position and size corresponding to the determined connection destination of the other end of the connector.

As a result, the information processing apparatus 10 can not only input the letters on the image such as the rough sketch but also input the letters to the outside of the image such as the rough sketch to cause the image generation model 31 to generate the image, and therefore the information processing apparatus 10 has excellent convenience. For example, in the information processing apparatus 10, since letters can be input to the outside of the image (canvas CV) such as the rough sketch, there is little concern that the region for inputting other letters or a rough sketch is insufficient, and it is possible to suppress the position and the size indicated by the letters from being changed from the intended ones depending on the amount of the letters to be input (the length of the sentence). Therefore, the information processing apparatus 10 can improve convenience in a case of using the image generation AI.

For example, the information processing apparatus 10 determines whether or not the other end of the connector is connected to a second input line input to the canvas CV, and determines that the connection destination of the other end of the connector is the second input line when the other end of the connector is determined to be connected to the second input line. Then, the information processing apparatus 10 generates a prompt for instructing so that an image corresponding to the word cluster in which the connection destination of the other end of the connector is determined to be the second input line is positioned at a position and a size determined according to a range of a stroke of the second input line.

As a result, the information processing apparatus 10 can generate a prompt for instructing so that the image intended by the user is positioned at an appropriate position in the generated image generated by the image generation model 31 by connecting the word cluster input by the user to the outside of the canvas CV and the range of the stroke of the second input line input to the canvas CV by the connector.

In addition, when it is determined that the other end of the connector is not connected to the second input line, the information processing apparatus 10 determines that the connection destination of the other end of the connector is the canvas CV. Then, the information processing apparatus 10 generates a prompt for instructing so that an image corresponding to the word cluster in which the connection destination of the other end of the connector is determined to be the canvas CV is applied to an entire range of the canvas CV.

As a result, since the information processing apparatus 10 can generate the prompt by the user inputting the letters to the outside of the canvas CV even for the content to be applied to the entire range of the canvas CV, and therefore the information processing apparatus 10 has excellent convenience.

In addition, the information processing apparatus 10 generates a prompt for instructing so that an image corresponding to the word cluster that is not connected to the one end of the connector (not extracted by the extraction unit) among the word clusters in the outer area OT is applied to an entire range of the canvas CV.

As a result, since the information processing apparatus 10 can generate the prompt by the user inputting the letters to the outside of the canvas CV even for the content to be applied to the entire range of the canvas CV, and therefore the information processing apparatus 10 has excellent convenience.

In addition, specifically, the information processing apparatus 10 determines the connection between the other end of the connector and the second input line based on the distance between the other end of the connector and the second input line, for example.

As a result, the information processing apparatus 10 can appropriately determine the correspondence relationship between the connector input by the user and the second input line indicating the position and the size in the canvas CV, and can generate a prompt for instructing so that the image intended by the user is positioned at an appropriate position in the generated image generated by the image generation model 31.

In addition, specifically, the information processing apparatus 10 may determine the connection between the other end of the connector and the second input line based on whether or not the other end of the connector enters a bounding box indicating a range in which the second input line is drawn.

As a result, the information processing apparatus 10 can appropriately determine the correspondence relationship between the connector input by the user and the second input line indicating the position and the size in the canvas CV, and can generate a prompt for instructing so that the image intended by the user is positioned at an appropriate position in the generated image generated by the image generation model 31.

In addition, the information processing apparatus 10 determines the connection between the first input line and the word cluster based on the distance between one end of the first input line (candidate for the connector) and the word cluster, and extracts the first input line connected to the word cluster as the connector.

As a result, the information processing apparatus 10 can appropriately extract the connector connected to the word cluster input by the user, and can generate a prompt for instructing so that the image intended by the user is positioned at an appropriate position in the generated image generated by the image generation model 31.

Specifically, the information processing apparatus 10 determines the connection between the first input line and the word cluster based on whether or not one end of the first input line (candidate for the connector) enters a bounding box indicating a range around the letter group of the word cluster, and extracts the first input line of which one end of the first input line enters the bounding box of the word cluster as the connector.

As a result, the information processing apparatus 10 can appropriately extract the connector connected to the word cluster input by the user, and can generate a prompt for instructing so that the image intended by the user is positioned at an appropriate position in the generated image generated by the image generation model 31.

In addition, the information processing apparatus 10 acquires the generated image output from the image generation model 31 by inputting the generated prompt to the image generation model 31.

As a result, the information processing apparatus 10 can automatically generate a prompt not only by the user inputting the letters on the image such as the rough sketch but also by the user inputting the letters to the outside of the image such as the rough sketch, and can acquire the generated image by inputting the generated prompt to the image generation model 31. That is, in a case where a person who is not good at drawing or in a case where it is difficult or it takes time and effort to express the objects with a drawing, the information processing apparatus 10 can cause the image generation model 31 to generate an image by inputting letters to the outside of an image such as a rough sketch without drawing. Therefore, the information processing apparatus 10 can improve convenience in a case of using the image generation AI.

In addition, the information processing apparatus 10 generates an image in which the letters, the first input line (the candidate for the connector), and the second input line input to the canvas CV are removed from the image in the canvas CV, as an input image for the image generation model 31. Then, the information processing apparatus 10 acquires the generated image output from the image generation model 31 by inputting the generated input image and the prompt to the image generation model 31.

As a result, since the information processing apparatus 10 removes the information other than the image (the letters, the first input line, and the second input line) from the image and inputs the prompt and the image to the image generation model 31. Therefore, it is possible to acquire a generated image with higher accuracy than when information other than the image remains in the image.

In addition, the prompt generation method in the information processing apparatus 10 according to the present embodiment includes a step of receiving an input to a canvas CV (an example of a first region) indicating a range of an image to be input to an image generation model 31, and an outer area OT (an example of a second region) indicating a predetermined range outside the canvas CV, a step of detecting a first input line (candidate for connector) input across the canvas CV and the outer area OT, a step of detecting letters input in the canvas CV and letters input in the outer area OT in a distinguishable manner, a step of determining, as a word cluster, a letter group including one or a plurality of words among the detected letters, a step of extracting a connector (an example of a connection line) of which one end of the detected first input line (the candidate for the connector) is connected to the word cluster in the outer area OT, and the word cluster connected to the connector, a step of determining a connection destination of the other end of the extracted connector, and a step of generating a prompt as an input sentence for the image generation model 31 based on the extracted word cluster and connector, and a position and a size corresponding to the connection destination of the other end of the determined connector, via a control unit 18 (image generation processing unit 110).

As a result, in the prompt generation method in the information processing apparatus 10, a prompt for causing the image generation model 31 to generate an image can be generated not only by inputting the letters on the image such as the rough sketch but also by inputting the letters to the outside of the image such as the rough sketch, and therefore the information processing apparatus 10 has excellent convenience. For example, according to the prompt generation method in the information processing apparatus 10, since the letters can be input to the outside of the image (canvas CV) such as the rough sketch, there is little concern that the input region of other letters or the rough sketch is insufficient, and it is possible to suppress the position and the size of the letters from being changed from the intended position and size depending on the amount of letters to be input (the length of the sentence). Therefore, according to the prompt generation method in the information processing apparatus 10, it is possible to improve convenience in a case of using the image generation AI.

In addition, the image generation method in the information processing apparatus 10 according to the present embodiment includes a step of receiving an input to a canvas CV (an example of a first region) indicating a range of an image to be input to an image generation model 31, and an outer area OT (an example of a second region) indicating a predetermined range outside the canvas CV, a step of detecting a first input line (candidate for connector) input across the canvas CV and the outer area OT, a step of detecting letters input in the canvas CV and letters input in the outer area OT in a distinguishable manner, a step of determining, as a word cluster, a letter group including one or a plurality of words among the detected letters, a step of extracting a connector (an example of a connection line) of which one end of the detected first input line (the candidate for the connector) is connected to the word cluster in the outer area OT, and the word cluster connected to the connector, a step of determining a connection destination of the other end of the extracted connector, and a step of generating a prompt as an input sentence for the image generation model 31 based on the extracted word cluster and connector, and a position and a size corresponding to the connection destination of the other end of the determined connector, and a step of acquiring a generated image output from the image generation model 31 by inputting at least the generated prompt to the image generation model 31, via a control unit 18 (image generation processing unit 110).

As a result, in the image generation method in the information processing apparatus 10, it is possible to cause the image generation model 31 to generate an image not only by inputting the letters on the image such as the rough sketch but also by inputting the letters to the outside of the image such as the rough sketch, and therefore the information processing apparatus 10 has excellent convenience. For example, according to the image generation method in the information processing apparatus 10, since the letters can be input to the outside of the image (canvas CV) such as the rough sketch, there is little concern that the input region of other letters or the rough sketch is insufficient, and it is possible to suppress the position and the size of the letters from being changed from the intended position and size depending on the amount of letters to be input (the length of the sentence). Therefore, according to the image generation method in the information processing apparatus 10, it is possible to improve convenience in a case of using the image generation AI.

Although the embodiments of the present invention have been described in detail with reference to the drawings, the specific configuration is not limited to the above-described embodiment, and designs and the like within a range not departing from the scope of the present invention are also included. For example, each configuration described in the above-described embodiment can be freely combined with each other.

In addition, in the above-described embodiment, the example in which the letters are input on the rough sketch by hand has been described, but the input of the letters is not limited to handwriting, and a keyboard or the like can also be used.

In addition, in the above-described embodiment, the example in which the display 150 is one display provided over the first chassis 10A and the second chassis 10B has been described, but the present invention is not limited to this. For example, the information processing apparatus 10 may be provided with two displays, one for each of the first chassis 10A and the second chassis 10B. In addition, the information processing apparatus 10 may be provided with a display only in one of the first chassis 10A and the second chassis 10B (for example, only the first chassis 10A).

In addition, the information processing apparatus 10 is not limited to a clamshell type (laptop) PC, and may be, for example, a tablet type PC or a desktop type PC.

In addition, in the above-described embodiment, an example of a touch panel type display in which the input unit (touch sensor) and the display unit (display) are integrated has been described, but a non-touch panel type display that does not have the input unit (touch sensor) may be used. In that case, for example, a touch pad, a mouse, or the like may be used as the input device that receives the operation instead of the input unit (touch sensor).

The information processing apparatus 10 described above has a computer system inside. A program for realizing the functions of each configuration included in the information processing apparatus 10 described above may be recorded on a computer-readable recording medium, and the program recorded on the recording medium may be loaded into the computer system and executed to perform the processing in each configuration included in the information processing apparatus 10 described above. Here, "loading the program recorded on the recording medium into the computer system and executing" includes installing the program in the computer system. The "computer system" referred to here includes hardware such as an OS and peripheral devices. In addition, the "computer system" may include a plurality of computer devices connected via a network including a communication line such as the Internet, a WAN, a LAN, or a dedicated line. In addition, the "computer-readable recording medium" refers to a storage device such as a portable medium such as a flexible disk, a magneto-optical disk, a ROM, or a CD-ROM, or a hard disk built in a computer system. As described above, the recording medium in which the program is stored may be a non-transitory recording medium such as a CD-ROM.

In addition, the recording medium also includes a recording medium which is provided internally or externally and accessible from a distribution server to distribute the program. It should be noted that a configuration in which after the program is divided into a plurality of parts and each of the parts is downloaded at different timings, the program is combined into each configuration included in the information processing apparatus 10, or a distribution server that distributes each of the divided programs may be different. Further, the "computer-readable recording medium" includes a recording medium that holds a program for a certain period of time, such as a volatile memory (RAM) inside a computer system serving as a server or a client when a program is transmitted via a network. In addition, the program may be a program for realizing a part of the above-described functions. Furthermore, the above-described functions may be realized in combination with a program already recorded in the computer system, which is a so-called difference file (difference program).

In addition, a part or all of the functions provided in the information processing apparatus 10 in the above-described embodiment may be realized as an integrated circuit such as a large scale integration (LSI). Each function may be individually processed, or a part or all of the functions may be integrated and processed. In addition, the method of integrating the circuits is not limited to LSI, and may be realized by a dedicated circuit or a general-purpose processor. In addition, in a case where a technique of integrating a circuit has appeared as a substitute for LSI due to the advancement of semiconductor technology, an integrated circuit using the technique may be used.

### Description of Symbols

- 10: information processing apparatus
- 10A: first chassis
- 10B: second chassis
- 30: image generation server
- 31: image generation model
- 11: communication unit
- 12: RAM
- 13: storage unit
- 14: speaker
- 15: display unit
- 16: camera
- 150: display
- 150A: first screen region
- 150B: second screen region
- 155: touch sensor
- 18: control unit
- 110: image generation processing unit
- 111: letter detection unit
- 112: word cluster determination unit
- 113: position information acquisition unit
- 114: prompt generation unit
- 115: letter removal unit
- 116: generated image acquisition unit
- 210: image generation processing unit
- 211: letter detection unit
- 212: word cluster determination unit
- 213: connector candidate detection unit
- 214: connector extraction unit
- 215: connection destination determination unit
- 216: position information acquisition unit
- 217: prompt generation unit
- 218: letter removal unit
- 219: generated image acquisition unit
- SYS: information processing system

## Claims

1. An information processing apparatus comprising:
an input reception unit configured to receive an input to a first region indicating a range of an image to be input to an image generation model, and a second region indicating a predetermined range outside the first region;
a line detection unit configured to detect a first input line input across the first region and the second region;
a letter detection unit configured to detect letters input in the first region and letters input in the second region in a distinguishable manner;
a word cluster determination unit configured to determine, as a word cluster, a letter group including one or a plurality of words among the letters detected by the letter detection unit;
an extraction unit configured to extract a connection line of which one end of the first input line detected by the line detection unit is connected to the word cluster in the second region, and the word cluster connected to the connection line;
a connection destination determination unit configured to determine a connection destination of the other end of the connection line extracted by the extraction unit; and
a prompt generation unit configured to generate a prompt as an input sentence for the image generation model based on the word cluster and the connection line extracted by the extraction unit, and a position and a size corresponding to the connection destination of the other end of the connection line determined by the connection destination determination unit.

2. The information processing apparatus according to claim 1,
wherein the connection destination determination unit determines whether or not the other end of the connection line is connected to a second input line input in the first region, and determines that the connection destination of the other end of the connection line is the second input line when the other end of the connection line is determined to be connected to the second input line, and
the prompt generation unit generates the prompt for instructing so that an image corresponding to the word cluster in which the connection destination of the other end of the connection line is determined to be the second input line is positioned at a position and a size determined according to a range of a stroke of the second input line.

3. The information processing apparatus according to claim 2,
wherein the connection destination determination unit determines that the connection destination of the other end of the connection line is the first region when the other end of the connection line is determined not to be connected to the second input line, and
the prompt generation unit generates the prompt for instructing so that an image corresponding to the word cluster in which the connection destination of the other end of the connection line is determined to be the first region is applied to an entire range of the first region.

4. The information processing apparatus according to claim 2,
wherein the prompt generation unit generates the prompt for instructing so that an image corresponding to the word cluster that is not extracted by the extraction unit among the word clusters in the second region is applied to an entire range of the first region.

5. The information processing apparatus according to claim 2 or 3,
wherein the connection destination determination unit determines connection between the other end of the connection line and the second input line based on a distance between the other end of the connection line and the second input line.

6. The information processing apparatus according to claim 2 or 3,
wherein the connection destination determination unit determines connection between the other end of the connection line and the second input line based on whether or not the other end of the connection line enters a bounding box indicating a range in which the second input line is drawn.

7. The information processing apparatus according to any preceding claim,
wherein the extraction unit determines connection between the first input line and the word cluster based on a distance between the one end of the first input line and the word cluster, and extracts the first input line connected to the word cluster as the connection line.

8. The information processing apparatus according to any preceding claim,
wherein the extraction unit determines connection between the first input line and the word cluster based on whether or not the one end of the first input line enters a bounding box indicating a range around the letter group of the word cluster, and extracts, as the connection line, the first input line of which the one end of the first input line enters the bounding box of the word cluster.

9. The information processing apparatus according to any preceding claim, further comprising:
a generated image acquisition unit configured to acquire a generated image output from the image generation model by inputting at least the prompt generated by the prompt generation unit to the image generation model.

10. The information processing apparatus according to any of claims 2 to 6, further comprising:
a letter removal unit configured to generate an image in which the letters input in the first region, the first input line, and the second input line are removed from an image in the first region, as an input image for the image generation model; and
a generated image acquisition unit configured to acquire a generated image output from the image generation model by inputting the input image generated by the letter removal unit and the prompt generated by the prompt generation unit to the image generation model.

11. A prompt generation method in an information processing apparatus, the method comprising:
a step of receiving an input to a first region indicating a range of an image to be input to an image generation model, and a second region indicating a predetermined range outside the first region, via an input reception unit;
a step of detecting a first input line input across the first region and the second region via a line detection unit;
a step of detecting letters input in the first region and letters input in the second region in a distinguishable manner via a letter detection unit;
a step of determining, as a word cluster, a letter group including one or a plurality of words among the letters detected by the letter detection unit, via a word cluster determination unit;
a step of extracting a connection line of which one end of the first input line detected by the line detection unit is connected to the word cluster in the second region, and the word cluster connected to the connection line, via an extraction unit;
a step of determining a connection destination of the other end of the connection line extracted by the extraction unit via a connection destination determination unit; and
a step of generating a prompt as an input sentence for the image generation model based on the word cluster and the connection line extracted by the extraction unit, and a position and a size corresponding to the connection destination of the other end of the connection line determined by the connection destination determination unit, via a prompt generation unit.

12. An image generation method in an information processing apparatus, the method comprising:
a step of receiving an input to a first region indicating a range of an image to be input to an image generation model, and a second region indicating a predetermined range outside the first region, via an input reception unit;
a step of detecting a first input line input across the first region and the second region via a line detection unit;
a step of detecting letters input in the first region and letters input in the second region in a distinguishable manner via a letter detection unit;
a step of determining, as a word cluster, a letter group including one or a plurality of words among the letters detected by the letter detection unit, via a word cluster determination unit;
a step of extracting a connection line of which one end of the first input line detected by the line detection unit is connected to the word cluster in the second region, and the word cluster connected to the connection line, via an extraction unit;
a step of determining a connection destination of the other end of the connection line extracted by the extraction unit via a connection destination determination unit;
a step of generating a prompt as an input sentence for the image generation model based on the word cluster and the connection line extracted by the extraction unit, and a position and a size corresponding to the connection destination of the other end of the connection line determined by the connection destination determination unit, via a prompt generation unit; and
a step of acquiring a generated image output from the image generation model by inputting at least the prompt generated by the prompt generation unit to the image generation model, via a generated image acquisition unit.

13. The image generation method according to claim 12,
wherein the step of determining a connection destination comprises determining whether or not the other end of the connection line is connected to a second input line input in the first region, and determining that the connection destination of the other end of the connection line is the second input line when the other end of the connection line is determined to be connected to the second input line, and
the step of generating a prompt comprises generating the prompt for instructing so that an image corresponding to the word cluster in which the connection destination of the other end of the connection line is determined to be the second input line is positioned at a position and a size determined according to a range of a stroke of the second input line.

14. The image generation method according to claim 13,
wherein the step of determining a connection destination comprises determining that the connection destination of the other end of the connection line is the first region when the other end of the connection line is determined not to be connected to the second input line, and
the step of generating a prompt comprises generating the prompt for instructing so that an image corresponding to the word cluster in which the connection destination of the other end of the connection line is determined to be the first region is applied to an entire range of the first region.

15. The image generation method according to claim 13,
wherein the step of generating a prompt comprises generating the prompt for instructing so that an image corresponding to the word cluster that is not extracted by a step of extracting a connection line among the word clusters in the second region is applied to an entire range of the first region.
